# EUROPEAN PATENT APPLICATION

(11) **EP 1 615 156 A2**
(43) Date of publication of application: **11.01.2006**
(21) Application number: 05253543.2
(22) Date of filing: 09.06.2005
(51) Int. Cl.: G06K 7/00, G06K 1/12, B41J 3/407, H01Q 13/20

(54) **Auto sense and encode printer system for multiple classes of RFID tags**

(30) Priority: 09.06.2004 US 578657 P
(71) Applicant: Printronix, Inc., Irvine, California 92623-1005 (US)
(72) Inventor: Chapman, Theodore, San Juan Capistrano, CA 92675 (US); Edwards, Andrew, Irvine, CA 92604 (US)
(74) Representative: Harland, Linda Jane

(57) **Abstract**

An RFID printer system and method interrogates or accesses RFID tags automatically using a user-defined sequence of settings for different RFID tags or classes. Once a successful interrogation is completed, the settings are saved and the saved settings are used for interrogation on the next tag. Each new roll of tags/labels,starts interrogation with the first of the settings. Consequently, the printer system can read from and write to tags of more than one class without hardware or software changes in the printer.

## Description

### RELATED APPLICATION

The present application is based on and claims priority to U.S. Provisional application Serial No. 60/578,657, filed June 9, 2004.

### BACKGROUND

### Field of Invention

The present invention relates generally to printer systems, and more particularly to RFID printer systems.

### Related Art

Radio Frequency Identification (RFID) systems represent the next step in automatic identification techniques started by the familiar bar code schemes. Whereas bar code systems require line-of-sight (LOS) contact between a scanner and the bar code being identified, RFID techniques do not require LOS contact. This is a critical distinction because bar code systems often need manual intervention to ensure LOS contact between a bar code label and the bar code scanner. In sharp contrast, RFID systems eliminate the need for manual alignment between an RFID tag and an RFID reader or interrogator, thereby keeping labor costs at a minimum. In addition, bar code labels can become soiled in transit, rendering them unreadable. Because RFID tags are read using RF transmissions instead of optical transmissions, such soiling does not necessarily render RFID tags unreadable. Moreover, RFID tags may be written to in write-once or write- many fashions whereas once a bar code label has been printed further modifications are impossible. These advantages of RFID systems have resulted in the rapid growth of this technology despite the higher costs of RFID tags as compared to a printed bar code label.

Even with a growing trend toward RFID labels, there are advantages to placing optical information on a label so that the package has both optical and RFID information, such as having the ability to read the label using more than one technology. This may be beneficial because RFID label technology is not as widespread as barcode technology, and many businesses or users may not have suitable RFID readers to read the RFID tag.

Labels having both RFID and optically readable information can be produced in a printer, such as a thermal printer, by first printing optically readable information on the label and then programming or encoding the RFID tag embedded within the label. Other types of printers may first program the label and then print the information. Still other printers may read the pre-programmed or encoded information from the RFID tag and print the information on the label as optically readable information, such as barcodes. Typical RFID printers are configured to read or encode one type of RFID tag, which enables the printer to operate more efficiently.

However, with the growth of the RFID industry, there are and will be many different types of RFID tags, such as different classes defined by EPCglobal. Thus, it would be desirable to have printers that can print optically readable information and read or encode a tag regardless of the type of RFID tag used in the printer system without requiring the user to manually change printer settings.

### SUMMARY

According to one aspect of the present invention, an RFID printer system comprises a multi-protocol reader and an antenna capable of interrogating multiple classes of RFID tags. The reader may be a single multi-protocol reader or a plurality of single protocol readers. The reader interrogates (e.g., encodes or reads) the RFID tag using settings of a first type or class of RFID tag. If the interrogation is unsuccessful, the reader interrogates the tag with a second type or class of RFID tag. This process continues until either the RFID tag is successfully interrogated or the reader is unable to interrogate the tag.

If the tag is successfully interrogated, the reader interrogates the next tag using the same class or type settings. If, at any time, the reader is unable to interrogate a tag with its current settings, it sequences through its list of available classes until successful. When a tag is unable to be read by the reader using all of its supported tag settings, an appropriate action is taken by the printer. Examples include printing a specific visual indicator so that the user knows that the particular tag was not interrogated or removing the tag before it is printed or applied by the printer.

Accordingly, the printer system is able to encode and print to more than one class of RFID tag without making any hardware or software changes in the printer and with or without printer configuration changes.

This invention will be more fully understood in light of the following detailed description taken together with the accompanying drawings.

### BRIEF DESCRIPTION OF THE DRAWINGS

Fig. 1 is a block diagram of a printer system according to one embodiment of the present invention;

Figs. 2A and 2B show RFID antennas for use in the printer system of Fig. 1 according to different embodiments; and

Fig. 3 is a flowchart illustrating a process for interrogating an RFID tag according to one embodiment.

Embodiments of the present invention and their advantages are best understood by referring to the detailed description that follows. It should be appreciated that like reference numerals are used to identify like elements illustrated in one or more of the figures.

### DETAILED DESCRIPTION

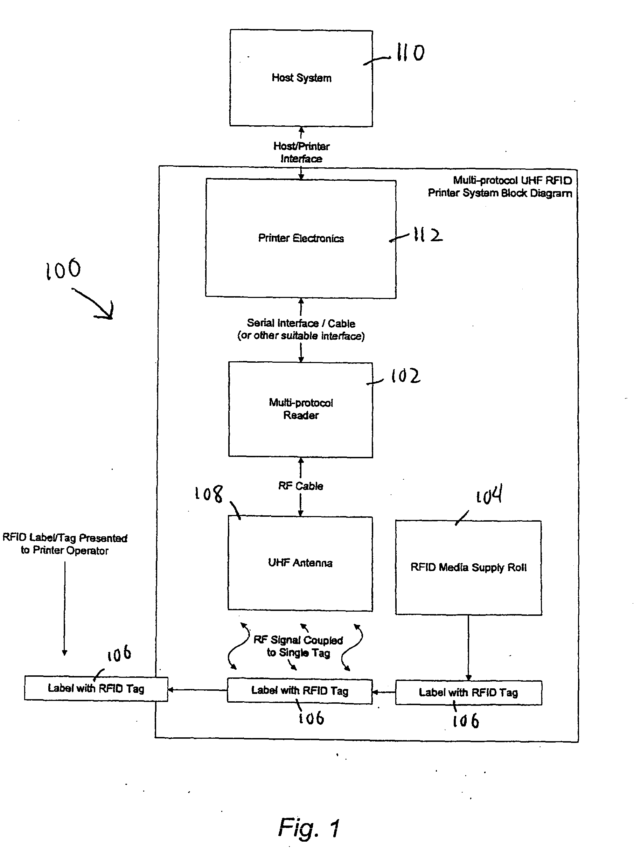

Fig. 1 is a block diagram of an exemplary radio frequency identification (RFID) printer system 100 with a multi-protocol reader 102 that may be used with the present invention. RFID printer system 100 also includes a roll 104 of labels 106 or media, where an RFID tag is embedded in each label 106. RFID tags are passive or active tags available from a multitude of manufacturers, including Alien Technology Corporation of Morgan Hill, CA, Matrics, Inc. of Rockville, MD, and Philips Semiconductor of the Netherlands. Labels from roll 104 are fed past an RFID antenna 108, programmed or read, and printed by a thermal print head or other print mechanism. RFID antenna 108 is positioned with respect to the labels to enable efficient or optimized interrogation of the labels. A host computer 110 is coupled to printer electronics or a printer controller 112, such as through a host/printer interface. Note that host computer 110 is typically external to and not part of the printer system.

Printer controller 112 is in turn coupled to multi-protocol reader 102, such as by a serial interface, cable, Ethernet, or other suitable interface. Printer firmware is enhanced to support low level reader commands, such as to synchronize the tag write/read processes with the printer label movement through the print system. Reader 102 is coupled to RFID antenna 108, such as to the reader RF port, thereby enabling the RFID tag on each label to be written to, encode, and/or verified. Reader 102 may be mechanically mounted within or outside of the printer enclosure. Through host computer 110, printer controller 112, multi-protocol reader 102 and antenna 108, different classes or types of RFID tags may be interrogated, which will be discussed in detail below. After interrogation by antenna 108, the label passes through a thermal print head for printing or other desired action. The resulting label then has both a printed media as well as a programmed RFID tag that can be read, such as with bar code scanners and RF readers, respectively.

Labels 106 from roll 104 pass by RFID antenna 108 for interrogation, typically at a high rate of speed. For example, labels 106 pass at a speed of up to 10 inches per second, which for a 6-inch label is up to 5 labels every 3 seconds. A media drive motor, coupled to printer controller 112, drives a platen to pull labels 106 through the printer, as is known in the art. Printer controller 112 is also coupled to a power supply and a user-operated control panel, which may be part of host computer 110. The control panel enables the user to control certain operations of the print system, as will be discussed below. Printer controller 112 also controls thermal ribbon drive motors and receives information from a label position sensor, which allows printer controller 112 to communicate the appropriate actions to other portions of the printer system, based on information read from the RFID tag. An interface adapter and power supply assembly can be placed within multi-protocol reader 102 to provide power to the reader, which in turn can be used to power RFID antenna 108.

RFID antenna 108 is capable of interrogating difference classes of RFID tags and different tag antenna designs. As used herein, interrogating can include reading from or writing to an RFID tag. The different classes can be distinguished by different radio frequency air-interface protocols. The data formats for the different classes are equivalent and are defined by bodies such as EPCglobal. Types of EPCglobal tags include EPCglobal Class 0, EPCglobal Class 0 writeable (Matrics), EPCglobal Class 0 writeable (Impinj), EPCglobal Class 1, EPCglobal Class 1 Generation 2, Class 2, Philips 1.19 commonly used existing ISO RFID standards.

In order to interrogate tags of different classes, both the antenna and reader must be able to interrogate multiple types or classes of tags. Suitable readers include multi-protocol readers from companies such as Applied Wireless Identification of Monsey, NY. Multiple single class readers can also be used as multi-protocol reader 102. For example, one reader may be designed from EPCglobal Class 0 tags, while another reader may be designed from EPCglobal Class 1 tags. These single protocol readers can then be connected so that different tag protocols can be interrogated within a single printer system.

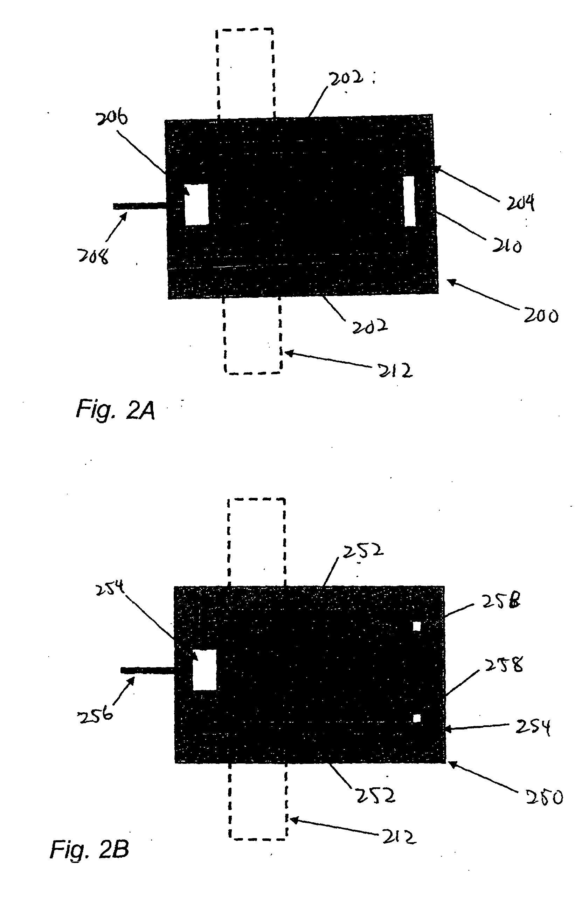

The multi-protocol reader is used in conjunction with an antenna which can also support different classes or tag protocols. Two suitable antenna designs are shown in Figs. 2A and 2B. In Fig. 2A, an RFID antenna 200 includes two electrical conductors forming a transmission line 202 over a printed circuit board assembly 204. Both conductors are formed from copper embedded in a flexible dielectric material according to one embodiment, although other conductive materials may also be suitable. Transmission line 202 is driven by a phase splitter and impedance matching network 206 that is connected, in one embodiment, to a 50 ohm coaxial cable 208, which is coupled to the RFID reader. The two outputs of the phase splitter and impedance matching network 206 produce signals 180° out of phase and are electrically connected to the two transmission line conductors by means of two short printed circuit etch runs.

Network 206 also matches the 50 ohm characteristic impedance of the coaxial cable 208 to the 300 ohm impedance of the transmission line 202. Transmission line 202 is electrically terminated, in one embodiment, by a 300 ohm resistor 210. In one embodiment each conductor of transmission line 202 is 1.8 inches in length and the two conductors are separated from each other by 0.8 inches over the surface of printed circuit board assembly 204. Although referred to as a 300 ohm transmission line, transmission lines of other characteristic impedances may be used for the RFID antenna. Transmission lines 202 are parallel to the motion of the RFID label (and the RFID tag) (shown by dotted lines 212) as it passes by RFID antenna 108.

Fig. 2B shows another embodiment of the RFID antenna. RFID antenna 250 is similar to the one of Fig. 2A, except that it has two microstrip transmission lines 252 formed over a printed circuit board ground plane assembly 254. Both microstrip lines 252 are formed from copper embedded in a flexible dielectric material according to one embodiment, although other conductive materials may also be suitable. Microstrip lines 252 are driven by a phase splitter and impedance matching network 254 connected to a 50 ohm coaxial cable 256, which is coupled to the RFID reader 102, as with Fig. 2A. The two outputs of the phase splitter and impedance matching network 254 also produce signals 180° out of phase and are electrically connected to the two transmission lines by means of two short printed circuit etch runs. The microstrips are electrically terminated by 100 ohm resistors 258. In one embodiment, each transmission line 252 is 1.8 inches in length and the two transmission lines are separated from each other by 0.8 inches over the surface of printed circuit board assembly 254. Although referred to as "microstrips", any suitable set of parallel transmission lines may be used for the RFID antenna. Additional details of both antennas are disclosed in commonly-owned U.S. application Serial Nos. 10/863,055 and 10/863,317, both filed June 7, 2004 and are incorporated by reference in their entirety. Other antenna types may also be suitable, such as single transmission line antennas.

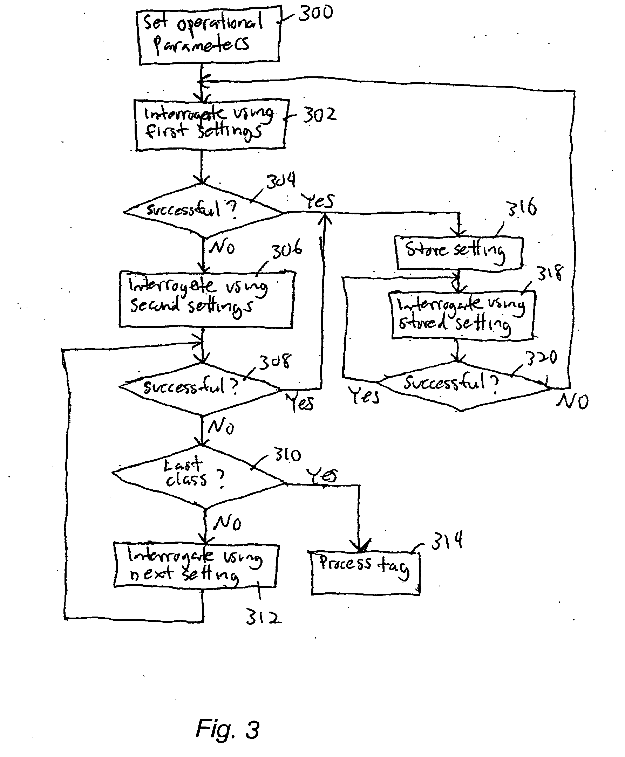

One aspect of the invention is the ability to automatically detect the class of RFID tag, without prior knowledge of the tag type, in the course of accessing the tag to read data from or write new data to. Fig. 3 is a flow chart illustrating the steps for interrogating an RFID tag according to one embodiment. In operation 300, the user sets the printer's operational parameters, such as through a control panel menu. One of these parameters is referred to herein as "Auto Tag Sensing". When configured for Auto Tag Sensing, no user intervention is required to configure the printer to operate with a particular class of tag. Based on this setting, the printer firmware would automatically and sequentially attempt to access the tag using the available protocols available with the reader, by using the reader low level command interface, which will now be discussed.

As label 106 with an embedded tag is moved within range of RFID antenna 108 (see Fig. 1), the printer firmware commands the multi-protocol reader to interrogate the tag using the first identified class or protocol selection (e.g., EPCglobal Class 1) in operation 302. As is known by those skilled in the art, "within range" is dependent on the reader and antenna design, and changes depending on the application and design. Interrogating or accessing the tag is done using the low level commands specific to the particular reader used. The class or protocol selection can be maintained in a table form in a memory of the reader and may be set by the user in any order or pre-set as required by application requirements. Access or interrogation refers to read, write, or any other form of tag communication.

Next, in operation 304, the multi-protocol reader determines if the tag was interrogated successfully. Successful interrogation can be determined by the user or based on a pre-established criteria, such as based on a maximum number of attempts. If the tag was not successfully interrogated, it tries interrogation using the second class or protocol (e.g., EPCglobal Class 0) in operation 306. If the interrogation was still not successful, as determined in operation 308, the system determines, in operation 310, whether the second class is the last class the reader is capable of interrogating. If the reader can interrogate additional classes or protocols, it does so using the next class or protocol in operation 312. This process of sequentially using stored protocols continues.

If the tag is not successfully interrogated after all available protocols have been used, as determined in operation 310, the tag is processed as desired in operation 314. For example, the label containing the tag is printed with an identifying mark to indicate to the user that this tag was not successfully interrogated. In another example, the label containing the tag is removed from the label roll so that it is not applied, printed upon, or further used. In one embodiment, during attempted interrogation of the tag, the tag remains stationary under the antenna. However, as faster RFID silicon technologies become available, the tag/label may not need to remain stationary and may be programmed on-the-fly in parallel with the label print process. The number of attempts to program the tag with the currently selected protocol may be programmed for optimal throughput and label yield. Additional tag/label access retries are permitted and may be selected through the control panel menu. This in turn causes the printer to configure the reader and/or the printer itself to retry a defined number of times.

Once the reader successfully interrogates the tag (as determine in operation 304 or 308), the class or protocol setting is saved in operation 316. Interrogation then proceeds on the next tag using the stored setting in operation 318. Interrogation on subsequent tags in the roll continues with the stored setting as long as the tags are interrogated successfully, as determined in operation 320. However, once a tag is not interrogated successfully using the stored setting, the interrogation starts again with the first class or protocol of the reader in operation 302.

As soon as the reader successfully interrogates the tag, the printer continues to process the tag in the normal way. This may include programming new data into the RFID tag and printing on the associated label.

Having thus described embodiments of the present invention, persons skilled in the art will recognize that changes may be made in form and detail without departing from the scope of the invention. Thus the invention is limited only by the following claims.

## Claims

1. A radio frequency identification (RFID) printer system, comprising:
an RFID reader configured to interrogate multiple classes of RFID tags;
a printer controller coupled to the RFID reader configured to indicate to the RFID reader a sequence of classes to use to interrogate an RFID tag; and
an RFID antenna coupled to the RFID reader configured to interrogate multiple classes of RFID tags.

2. The system of claim 1, wherein the classes comprise EPCglobal Class 1 and EPCglobal Class 0.

3. The system of claim 1, wherein the RFID antenna comprises:
two electrical conductors, each having a first end and a second end;
a resistive element coupled to the second ends of the two conductors; and
a phase splitter coupled between the first ends of the two conductors and the RFID reader.

4. The system of claim 1, wherein the RFID antenna comprises:
two parallel transmission lines; and
a phase splitter coupled between the two transmission lines.

5. The system of claim 1, wherein the sequence of classes is user defined.

6. The system of claim 1, wherein the multi-protocol reader comprises a plurality of single protocol readers.

7. A method of operating a radio frequency identification (RFID) printer system, comprising:
establishing, within the printer system, a sequence of settings for different classes of RFID tags;
interrogating an RFID tag using a first one of the settings; and
interrogating the RFID tag using a second one of the settings if the first interrogating was unsuccessful.

8. The method of claim 7, wherein the sequence of settings can be different from user to user.

9. The method of claim 7, wherein the different classes comprise EPCglobal Class 1 and EPCglobal Class 0.

10. The method of claim 7, further comprising storing the setting for a successful interrogation.

11. The method of claim 7, further comprising interrogating a next RFID tag using the same settings as an immediately previous successful interrogation.

12. The method of claim 7, further comprising maintaining the RFID tag within range for interrogation during the interrogations.

13. The method of claim 12, further comprising not moving the RFID tag during the interrogations.

14. The method of claim 7, wherein the interrogating comprises reading from or writing to the tag.

15. The method of claim 7, further comprising printing a label containing the tag after a successful interrogation.

16. The method of claim 7, wherein the first interrogating is always with the first one of the settings when interrogating a new roll of RFID tags.

17. The method of claim 7, further comprising interrogating the tag using a third one of the settings if the first and second interrogating was unsuccessful.

18. A method of operating a radio frequency identification (RFID) printer system, comprising:
sequentially using a user-defined sequence of settings for different RFID tag classes to interrogate an RFID tag; and
storing the settings of a successful interrogation.

19. The method of claim 18, further comprising using the stored settings to interrogate additional RFID tags in the same roll as the RFID tag.

20. The method of claim 18, further comprising sequentially interrogating an RFID tag using settings from a first one of the sequence when a different roll of tags is installed into the printer system or when a tag is unsuccessfully interrogated after a successful interrogation of a previous tag.
